# EUROPÄISCHE PATENTSCHRIFT

(11) **EP 1 621 521 B1**
(45) Veröffentlichungstag und Bekanntmachung des Hinweises auf die Patenterteilung: **06.06.2012**
(21) Anmeldenummer: 04017752.9
(22) Anmeldetag: 27.07.2004
(51) Int. Cl.: C02F 5/08, C02F 5/10

(54) **Verfahren zur Entfernung von Belägen aus Wasserversorgungseinrichtungen und seine Verwendung**
Process for removing deposits from potable water supply utilities
Procédé pour l'élimination des entartrages dans les systèmes de distribution d'eau potable

(43) Veröffentlichungstag der Anmeldung: 01.02.2006
(73) Patentinhaber: Carela GmbH, 79618 Rheinfelden (DE)
(72) Erfinder: Späne, Rainer, 79618 Rheinfelden (DE); Reisgys, Michael, Dr.rer.nat., 4132 Muttenz (CH)
(74) Vertreter: Andrae, Steffen

(56) Entgegenhaltungen:
- EP-A- 1 300 368
- US-A- 4 195 974
- US-A- 4 357 256
- US-A- 4 797 225
- US-B1- 6 353 131
- DATABASE WPI Section Ch, Week 198517 Derwent Publications Ltd., London, GB; Class D15, AN 1985-103887 XP002309516 & SU 1 117 287 A (WATER SUPPLY HYDROGEOL) 7. Oktober 1984 (1984-10-07)

## Beschreibung

Die vorliegende Erfindung betrifft die Entfernung von Belägen (Inkrustationen) aus Wasserversorgungseinrichtungen, insbesondere zur Entfernung von an den Wänden und an technischen Einrichtungen (d.h. den mit Wasser im Kontakt befindlichen Oberflächen) von Wasserbehältern gebildeten oxidischen, in der Regel auch wechselnde Mengen an Biomasse und Biofilmen enthaltenden Belägen, d.h. die dafür bereiteten Behandlungslösungen und deren Verwendung zur Entfernung von Belägen der genannten Art.

Als Wasserversorgungseinrichtungen im Sinne der Verwendung dieses Begriffs in der vorliegenden Anmeldung werden in erster Linie Systeme und Einrichtungen bezeichnet, die mit kalten Frischwasser gespeist werden, das vorzugsweise aus natürlichen Quellen, z.B. Brunnen oder stehenden oder fließenden Gewässern stammt. Die Einrichtungen zur Wasserversorgung dienen vorzugsweise der kommunalen Trinkwasserversorgung, können jedoch z.B. auch Einrichtung zur Gewinnung und zur Zu- und Abfuhr von Kühl- oder Prozeßwasser für industrielle Zwecke sein, z.B. zu Kühlsystemen und Wärmetauschern für Anwendungen in der chemischen Industrie, der Lebensmittelindustrie, dem Brauereiwesen oder der Energietechnik.

Im folgenden wird die Erfindung anhand ihrer Anwendung im Zusammenhang mit einer bestimmten Art von Wasserversorgungseinrichtungen näher erläutert, nämlich Trinkwasserversorgungseinrichtungen in Form von Trinkwasserbehältern. Durch diese Erläuterungen der derzeit bevorzugten Auführungsform ist jedoch keine Einschränkung des Schutzes auf diese Anwendung beabsichtigt.

Es ist bekannt, dass die reduzierend wirkende Verbindung Natriumdithionit (Na₂S₂O₄) in wässriger Lösung unter geeigneten Konzentrations- und pH-Bedingungen in der Lage ist, eisen- und/oder manganoxidhaltige Oberflächenschichten aufzulösen, was z.B. zur Rostentfernung oder Dekontaminierung von radioaktiven Metalloberflächen genutzt wird. Es ist in diesem Zusammenhang auch schon bekannt, Komplexbildner von Di- und Polyphosphonsäuretyp mitzuverwenden (vgl. z.B. EP 527 908 A1).

Es ist ferner bereits vorgeschlagen worden, dithionithaltige wässige Lösungen zur Entfernung von u.a. eisen- und/oder manganoxidhaltigen Belägen einzusetzen, die sich in Einrichtungen wie z.B. Brunnen bilden, die der Wasserversorgung, insbesondere der Trinkwasserversorgung dienen. Es kann in diesem Zusammenhang verwiesen werden auf DE 33 03 802 A1 und DE 199 53 807 A1, die in erster Linie die Regenerierung von Brunnen betreffen, sowie WO 01/42148 bzw. EP 1 150 923 A1 oder DE 201 16 242 U1 bzw. EP 1 300 368 A1/B1 der Anmelderin, die Verfahren bzw. Mittel betreffen, die insbesondere für die Entfernung von Belägen von den Wänden von Trinkwasserversorgungseinrichtungen bestimmt sind.

Aus dem Erfinderschein SU 1117287 A ist es bekannt, eine wässrige Lösung, die 6 - 8 Masse-% Natriumdithionit, 8 - 10 Masse-% Rongalit und 0,3 - 0,5 Masse-% Natriumhexametaphosphat enthält, zur Auflösung von eisenhaltigen Ablagerungen in Brunnen zu verwenden, um diese zu regenerieren. Der Bestandteil Rongalit dient dazu, die reduzierenden Eigenschaften der Lösung zu stabilisieren.

Wie bereits in der EP 1 300 368 A1 erläutert wird, gibt es, anders als bei der Entfernung von Rost von technischen Metalloberflächen und Metallteilen, bei der Entfernung von in Trinkwasserversorgungseinrichtungen aus Frischwasser aufgebauten Belägen einige Besonderheiten, die es in der Regel nicht zulassen, zu deren Entfernung bekannte technische Rostentferner einzusetzen. So ist Trinkwasser ein Lebensmittel, in das keine als gesundheitsschädlich einzustufenden Substanzen eingebracht werden dürfen. Ferner ist die wichtigste Ursache für die Bildung der zu entfernenden Beläge die Lebenstätigkeit von bestimmten spezialisierten Mikroorganismen, die häufig als "Eisen- und Manganbakterien" bezeichnet werden. Das führt dazu, dass die zu entfernenden Beläge wechselnde Mengen von organischen Komponenten enthalten können, die die Wirkung von Substanzen, die an sich für eine Oxidauflösung geeignet sind, abschwächen können. Die zur Belagentfernung verwendeten Mittel dürfen ferner keine größeren Mengen an Substanzen enthalten, die dann, wenn sie in den behandelten Wasserversorgungseinrichtungen zurückbleiben, Nährstoffe für die belagbildenden Mikroorganismen darstellen, da dann die Neubildung der entfernten Beläge begünstigt würde, was den Reinigungserfolg schnell zunichte machen kann. Organische Belagkomponenten, die Nährstoffe für Mikroorganismen darstellen, können ferner eine Vermehrung von solchen Mikroorganismen im Trinkwasserspeicher begünstigen, die gesundheitlich bedenklich sind, so dass das gespeicherte Trinkwasser nicht mehr der Trinkwasserverordnung genügt und für den menschlichen Genuss ungeeignet wird. Schließlich müssen die verwendeten Substanzen unschädlich sein, wenn sie mit dem bei der Reinigung gebildeten Abwasser in die Umwelt gelangen, d.h. sie müssen unschädlich oder unter Umweltbedingungen leicht abbaubar sein, zumal Trinkwasserbehälter in der Regel außerhalb von Ortschaften auf Erhöhungen stehen und oft keinen Kanalisationsanschluß aufweisen.

Bei der Reinigung von Trinkwasserbehältern ergibt sich das zusätzliche Problem, dass diese Behälter, die in der Regel große unterirdische bzw. dunkle Kammern ohne direkten Lichtzutritt und mit beschänktem Luftaustausch sind, dadurch gereinigt werden, dass die Wände nach Ablassen des Behälterinhalts vom Arbeitspersonal mit einer Behandlungslösung besprüht und dann gespült werden. Zur Vermeidung einer gesundheitlichen Gefährdung bzw. Belästigung des Arbeitspersonals dürfen bei der Reinigung - und, soweit sie direkt vor Ort erfolgt, auch bei der Zubereitung der wässrigen Behandlungslösung - keine störenden Mengen von schädlichen, reizenden oder unangenehmen staubförmigen oder dampf- bzw. gasförmigen Produkte gebildet werden. Auch hierdurch ergeben sich Einschränkungen, die in der Mehrzahl aller Fälle eine einfache Verwendung von auf anderen Anwendungsgebieten einsetzbaren Belaglösern bei der Entfernung von Belägen aus Trinkwasserversorgungseinrichtungen, insbesondere bei der Trinkwasserbehälterreinigung, ausschließen.

In der DE 201 16 242 U1 bzw. EP 1 300 368 A1/B1 der Anmelderin wird ein festes Mittel beschrieben, das neben Natriumdithionit als reduzierenden Bestandteil (oder als wesentlichen Bestandteil der reduzierenden Komponente des Mittels) zur Verbesserung der Belagentfernung im Bereich der Trinkwasserversorgungseinrichtungen Komplexbildner auf der Basis organischer Phosphonate (die Mittel enthalten als Komplexbildner bevorzugt das Tetranatriumsalz der 2-Phosphono-1,2,4-tricarbonsäure; Abkürzung: PBTC-Na4; Handelsbezeichnung Bayhibit S) enthält und bei dem die problematischen Eigenschaften von Natriumdithionit, das ein die Atemwege und Augen reizendes Pulver ist (Gefahrenstoffverordnungs-Symbol "Gesundheitsschädlich") und das bei einer Lagerung in konzentrierter Form in Gegenwart von Feuchtigkeit zu einer Selbstentzündung neigt, maskiert sind, so dass das Mittel akzeptable Gebrauchseigenschaften aufweist.

Die unter Verwendung dieses Mittels erzeugten wäßrigen Behandlungslösungen haben sich in der jüngeren Zeit in der Praxis als sehr wirksam bewährt und wurden insbesondere auch wegen ihrer Effizienz und der geringen korrodierenden Wirkung auf die behandelten Einrichtungen (Wände, technische Rohrleitungen und Armaturen) zu den von Fachkreisen zunehmend bevorzugten modernen Mitteln für die Reinigung von Trinkwasserbehältern.

Im Zuge der praktischen Verwendung dieses Mittels haben sich jedoch auch einige praktische Mängel gezeigt, die es wünschwenswert erscheinen lassen, ein Mittel der genannten Art unter Modifizierung seiner Zusammensetzung noch weiter zu verbessern:
So ist die Lagerzeit eines Mittels der genannten Art auf nur etwa 1 Jahr begrenzt. Es muss auf konsequenten Feuchtigkeitsaussschluss bei der Produktion und der Lagerung der Mittel geachtet werden. Der bevorzugte Komplexbildner PBTC-Na4 ist stark hygroskopisch und enthält herstellungsbedingt ca. 10 % Wasser. Natriumdithionit, als unverzichtbarer Rezepturbestandteil, ist empfindlich gegenüber Wasser. Es zersetzt sich unter Feuchtigkeitseinwirkung. Als Folge lässt die reinigende Wirkung des Mittels nach, und nach einer gewissen Zeit kann häufig ein inakzeptabler Geruch von flüchtigen Zersetzungsprodukten festgestellt werden.

Der Gehalt an Natriumdithionit und PBTC-Na4 kann in Mitteln nach dem Stand der Technik nicht beliebig gesteigert werden. Es sind Kompromisse zwischen maximaler Wirkung und ausreichender Lagerstabilität einzugehen.

Die Mittel nach dem Stand der Technik enthalten zusätzlich wasserlösliche inerte Stoffe, zu denen wasserlösliche Alkalisalze von Mineralsäuren, insbesondere Alkalimetallchloride, gehören. Diese Stoffe senken die Feuchtigkeitsempfindlichkeit der Wirkstoffe in dem Mittel. Chloride sind aber bekannt dafür, dass sie in Form ihrer wässrigen Lösungen Korrosionsschäden an Edelstahloberflächen verursachen können.

Schließlich sind Stoffe mit organisch-chemisch gebundenem Kohlenstoffatomen im Trinkwasserbereich grundsätzlich negativ zu bewerten. Diese Stoffe können durch biologische Abbauprozesse als Nahrungsgrundlage für Mikroorganismen dienen und führen somit zu nicht tolerierbaren Keimbelastungen des Trinkwassers. Anorganisch-chemische Stoffe sollten daher im Trinkwasserbereich stets bevorzugt eingesetzt werden. Obwohl PBTC-Na4 bei Ausschluß von Tageslicht, d.h. z.B. bei der Verwendung zu Belagentfernung in Trinkwasserbehältern, nicht biologisch abgebaut wird, weist es als ein organisch-chemischer Stoff potentiell weiterhin die o.g. Nachteile organischer Stoffe auf, zumindest als Abwasserkomponente.

PBTC-Na4 ist außerdem ein hochpreisiger Rohstoff, was in seiner mehrstufigen chemischen Synthese und den nur wenigen Einsatzmöglichkeit in Wirtschaftsgütern begründet ist.

Die pulverförmigen Mittel zur Trinkwasseranlagenreinigung nach dem Stand der Technik können ferner beim Auflösen in Wasser zur Staubentwicklung neigen. Diese führt auf Grund des Anteil des Gefahrstoffs Natriumdithionit in den Mitteln zu einer Belästigung des Anwenders.

Es ist Aufgabe der vorliegenden Erfindung, ein Verfahren anzugeben, bei dem ein unter Einsatzbedingungen problemlos verwendbares Mittel zur Bereitung einer Dithionit enthaltenden Behandlungslösung für die Entfernung von Belägen aus Wasserversorgungseinrichtungen verwendet wird, das die geschilderten Unzulänglichkeiten der Mittel des Standes der Technik nicht mehr oder nur in einem verminderten Ausmaß aufweist.

Diese Aufgabe wird in ihrer breitesten Form durch das Verfahren gemäß Anspruch 1 gelöst.+

Vorteilhafte bzw. bevorzugte Ausgestaltungen des Verfahrens gemäß Anspruch 1 sind in den Unteransprüchen 2 bis 7 angegeben.

Nachfolgend werden die verwendete Zusammensetzung, die Bedeutung ihrer einzelnen Bestandteile, die Vorteile der daraus erhältlichen wäßrigen Behandlungslösungen sowie deren bevorzugte Verwendung noch ergänzend näher erläutert.

Als Komplexbildner werden erfindungsgemäß wenigstens teilweise Salze von höhermolekularen Phosphorsäuren, d.h. kondensierten Phosphorsäuren oder Polyphosphorsäuren eingesetzt. Diese können insbesondere Alkalimetallsalze von Di-, Tri-, Tetra- und höhermolekularen linearen Polyphosphorsäuren sein, die durch die allgemeinen Formeln Mₙ₊₂[PₙO₃ₙ₊₁] bzw. Mₙ[H₂PₙO₃ₙ₊₁] , worin M für ein einwertiges Metallion steht, beschrieben werden können, die jedoch auch Anteile von Alkalisalzen von cyclischen Metaphosphorsäuren, die durch die allgemeine Formel Mₙ[PₙO₃ₙ] beschrieben werden, umfassen können. Die bevorzugt verwendeten höhermolekularen Phosphorsäuren weisen vorzugsweise überwiegend, d.h. zu mehr als 50 Gew.-%, insbesondere mehr als 75 Gew.-%, oder ausschließlich, d.h. zu 100 Gew.-%, lineare Strukturen auf. Cyclische Polyphosphate ("Metaphosphate") gelten im Hinblick auf die angestrebte Komplexierung von Metallionen als unwirksam, und derartige Polyphosphate mit vernachlässigbarer Komplexierungswirkung sind daher den inerten Substanzen zuzuordnen und zählen nicht zu den Kompexbildnern i.S. der Verwendung dieses Begriffs in der vorliegenden Anmeldung.

Vorsorglich ist jedoch anzumerken, dass es für die Verwirklichung bzw. Benutzung der vorliegenden Erfindung nicht auf die Bezeichnung ankommt, unter der die zu verwendenden komplexierenden Polyphosphate im Handel angeboten werden, sondern auf die feststellbare Komplexierungswirkung. So wird berichtet, dass man im Handel auch Produkte findet, die zwar als "Hexametaphosphat" bezeichnet werden, die jedoch überwiegend Produkte mit linearen Strukturen enthalten und daher auch deutlich komplexierend wirken können. Die Verwendung derartiger Polyphosphate kann daher eine Benutzung der vorliegenden Erfindung darstellen.

Es ist bekannt, dass diese höhermolekularen kondensierten linearen Phosphate (catena-Polyphosphate) gute komplexierende Eigenschaften gegenüber mehrwertigen Metallionen besitzen. Sie werden daher in vielen Anwendungen, wie beispielsweise in Waschmitteln, Geschirrspülmitteln, zur Enthärtung von Kesselspeisewasser und ähnlichem eingesetzt. Hauptsächlich geht es dabei um die Nutzung des sogenannten "Threshold-Effekts", der auf einer Fixierung von Härtebildnern beruht, insbesondere der Komplexierung von Calcium- und Magnesiumionen aus dem Wasser. Metaphosphate weisen diese Wirkung der linearen Polyphosphate nicht in einem vergleichbaren Ausmaß auf.

Für die genannten Anwendungen werden höhermolekulare kondensierte Phosphate in großen Mengen produziert und sind günstig am Markt erhältlich.

Die höhermolekularen Phosphate sind rein anorganische Stoffe. Sie enthalten keinen organisch-chemisch gebundenen Kohlenstoff und können somit nicht durch mikrobiologische Abbauprozesse eine Nahrungsgrundlage für Mikroorganismen in Trinkwasseranlagen bilden. Eine Verkeimung des Trinkwassers ist nach der erfindungsgemäßen Anwendung einer Zusammensetzung, die als Komplexbildner nur anorganische kondensierte Phosphate, ggf. in Kombination mit zusätzlichen Anteilen inerter wasserlöslicher anorganischer Salze, enthält, nicht zu befürchten. Bei einer Verwendung der kondensierten Phosphate in Kombination mit Phosphonaten des Standes der Technik kann die Menge letzterer erheblich vermindert werden, so dass in Praxis kein Verkeimungseffekt mehr beobachtbar ist.

Da Natriumdithionit mit Wasser, welches in den anderen Rezepturbestandteilen enthalten sein kann, zu Zersetzungsprodukten reagiert, müssen die restlichen Rezepturbestandteile von Mitteln zur Trinkwasseranlagenreinigung möglichst wasserfrei oder zumindest wasserarm sein. Nach dem bisherigen Stand der Technik, wie er durch DE 201 16 242 U1 bzw. EP 1 300 368 A1/B1 der Anmelderin verkörpert wird, wurde PBTC-Na4 normalerweise in der vom Hersteller gelieferten Form, d.h. mit ca. 10 Gew.-% Wasser, als Komplexbildner eingesetzt. Die Lagerstabilität eines solchen Mittels ist nicht zuletzt aufgrund des genannten Wasseranteils begrenzt. Um die Zersetzungsreaktionen des Natriumdithionits in Anwesenheit des wasserhaltigen PBTC-Na4 zu kontrollieren, hatte es sich als erforderlich erwiesen, die Gesamtmenge an Natriumdithionit zu begrenzen und inerte Stoffe (z.B. Alkalichloride, Metaphosphat) zur Unterdrückung der Zersetzungsreaktionen des Natriumdithionits einzusetzen.

Die höhermolekularen Phosphate sind im Gegensatz zu den bisher verwendeten Phosphonaten in nahezu wasserfreier Form mit einem maximalen Wassergehalt von nur 1 % am Markt erhältlich. Das macht es möglich, unter direkter Verwendung von handelsüblichen Polyphosphaten, die gemeinsam mit der Puffersubstanz die gesamte nicht durch Dithionit gebildete Menge der Zusammensetzung bilden können, auf die bisher erforderlichen inerten Stoffe in Mitteln zur Trinkwasseranlagenreinigung zu verzichten. Eine Mitverwendung der genannten inerten Stoffe, insbesondere in Mengen, die unter den Mengen des Standes der Technik liegen, ist jedoch möglich, und die zusätzliche Anwesenheit solcher Stoffe führt nicht aus dem Schutzbereich der vorliegenden Erfindung heraus.

Die Anteile an Natriumdithionit und Komplexbildner in erfindungsgemäßzu verwendenden Zusammensetzungen können somit gegenüber den Wirkstoffanteilen in Mitteln, welche dem Stand der Technik entsprechen, erhöht werden. Die Reinigungswirkung gegenüber eisen- und manganhaltigen Belägen in Trinkwasserversorgungseinrichtungen ist entsprechend verbessert. Auch die Lagerstabilität der erfindungsgemäßen Mittel ist gegenüber dem Stand der Technik gesteigert.

Wie eingangs erläutert wurde, dürfen auch die Komplexbildner in einem Mittel zur Reinigung von Trinkwasseranlagen nicht toxisch sein oder andere gesundheitsschädliche Wirkungen aufweisen. Reste des Komplexbildners dürfen das Trinkwasser nicht negativ beeinflussen. Höhermolekulare Phosphate sind hier zusätzlich aus dem Grund besonders vorteilhaft, weil Phosphate, d.h. Orthophosphate und höhermolekulare kondensierte Phosphate, sogar als Lebensmittelzusatzstoffe zugelassen sind. Besonders hervorzuheben ist hier das Natriumtripolyphosphat. Es ist auch bereits als Aufbereitungsstoff für Trinkwasser in der "Liste der Aufbereitungsstoffe und Desinfektionsverfahren gemäß §12 Trinkwasserverordnung 2001" aufgeführt.

Die Reinigungswirkung der erfindungsgemäß zu verwendenden Zusammensetzungen gegenüber eisen- und manganhaltigen Ablagerungen aus Trinkwasseranlagen kann durch die Kombination von unterschiedlichen höhermolekularen Phosphaten gesteigert werden, wobei für den Einsatzfall verschiedene optimale Kombinationen durch den einschlägigen Fachmann auf der Basis der Lehre der vorliegenden Erfindung empirisch und ohne unzumutbaren Aufwand ermittelt werden können. Beispielsweise hat sich eine Komplexbildner-Kombination von Natriumtripolyphosphat mit Natriumhexametaphosphat in weiten Grenzen (9:1 bis 1:9) als sehr wirksam bzw. für eine praktische Verwendung noch geeignet erwiesen.

Das bei den festen pulverförmigen Mitteln des Standes der Technik häufig zu beobachtende Problem der Staubentwicklung bei der Bereitung der Behandlungslösung zur Trinkwasseranlagenreinigung durch Zugabe zu Wasser ist in dem teilweise sehr feinteiligen Zustand einiger Rohstoffe begründet.

Grobkörnigere Rohstoffe sind entweder nicht verfügbar, oder es kommt bei der Handhabung und Lagerung zu einer sekundären Bildung feiner Pulver durch Abrieb, oder die Lösegeschwindigkeit des Mittels wird für eine optimale Anwendung zu langsam.

Es stellt eine bevorzugte weitere Ausgestaltung erfindungsgemäßzu verwendender Zusammensetzungen dar, die Staubentwicklung durch den Zusatz einer staubbindenden Komponente zu vermeiden. Diese Komponente darf keine negativen Reaktionen mit den anderen Inhaltsstoffen der Zusammensetzung eingehen und muss für den Einsatz im Trinkwasserbereich geeignet sein. Flüssige oder feste wasserlösliche, aber möglichst wasserfreie, nicht hygroskopische Stoffe mit staubbindenden Eigenschaften erfüllen diesen Zweck. Als besonders geeignet erweisen sich wasserlösliche flüssige Substanzen mit einer geringen Flüchtigkeit bzw. ausreichend hohen Siedepunkten, insbesondere mehrwertige Alkohole, Polyglykole und Derivate von diesen Stoffen.

Diese können z.B. bei der Herstellung der Zusammensetzung durch Vermischen der Komponenten als Spühnebel auf die Bestandteile der Pulvermischung aufgebracht werden, so dass sie sich gleichmäßig in sehr geringen Mengen auf der Oberfläche der Pulverpartikel verteilen. Feste staubbindende Substanzen, z.B. Substanzen mit Oberflächen, die feinste Staubpartikel festhalten, z.B. elektrostatisch und/oder adhäsiv, werden einfach bei der Vermischung untergemischt.

Gewünschtenfalls können die Zusammensetzungen auch geeignete zusätzliche Mengen an Tensiden und/oder Netzmitteln enthalten, die grundsätzlich wie für die staubbindenden Substanzen beschrieben in die Zusammensetzungen eingeführt werden können. Diese können ggf. auch als staubbindende Komponenten dienen.

Die erfindungsgemäß zu verwendende Zusammensetzung ist vorzugsweise ein festes, rieselfähiges Produkt für die Trinkwasserbehälterreinigung, die sich gut in den erforderlichen Wassermengen lösen läßt.

Dabei werden vorzugsweise etwa 1 kg der trockenen Zusammensetzung in etwa 5 l Wasser gelöst. Auf Wunsch können natürlich auch höhere/geringere Verdünnungen gewählt werden. In Form der erhaltenen wässrigen Behandlungslösung kann sie in der üblichen Weise zur Lösung von Belägen auf den Wänden, einschließlich der Bodenflächen und anderer mit dem Wasser in Kontakt stehenden Flächen, und auf technischen Einrichtungen in Trinkwasserbehältern versprüht werden. Durch Nachwaschen mit Wasser werden Reste und Abbauprodukte und gelöste Substanzen ohne Probleme entfernt.

Als Reinigungsmittelkonzentrat ist die Zusammensetzung einfach, sicher und ohne übermäßige Transportkosten zum jeweiligen Anwendungsort zu transportieren, wo man daraus die benötigte Behandlungslösung herstellen kann.

Bei der Verwendung kommt es zu keiner nennenswerten Geruchsbelästigung, und aufgrund des vollständigen oder weitgehenden Ausschlusses organischer Verbindungen führt sie zu keinen unerwünschten Umweltbelastungen durch organische Wirkstoffe. Die Oxidationsprodukte des Natriumdithionits sind ebenfalls unschädlich, und Reste von Dithionit können gewünschtenfalls auf einfache Weise unschädlich gemacht werden.

Ein weiterer Vorteil liegt darin, dass die erhaltene Behandlungslösung für mineralische Beschichtungen von Trinkwasserbehältern besonders geeignet ist. Sie wirkt sehr gut, ohne mineralische Beschichtungen anzugreifen, während derartige Beschichtungen bei einer Verwendung anderer, insbesondere saurer, Reinigungsmittel stets in einem gewissen Grad korrosiv angegriffen werden.

Aus den obigen Ausführungen folgt für den Fachmann, dass erfindungsgemäß zu verwendende Zusammensetzungen in weiten Grenzen variieren können.

Es hat sich als praktisch erwiesen, die Zusammensetzungen anhand der Zusammensetzung einer Kernrezeptur zu definieren, die nur von Dithionit, insbesondere Natriumdithionit, komplexierenden Polyphosphaten und Puffersalzen, insbesondere Alkalicarbonaten bzw. -hydrogencarbonaten, gebildet wird.

In dieser Kernzusammensetzung können der Anteil des Dithionits (in Gew.-%) bis zu 80 Gew.-%, vorzugsweise bis 50 Gew.-%, der Anteil der Polyphosphate bis zu 80 Gew.-%, vorzugsweise bis zu 60 Gew.-% betragen, wobei die Menge der Puffersubstanzen im Bereich von 3 bis 30 Gew.-%, vorzugsweise 5 bis 20 Gew.-% liegen kann. Die Summe der genannten Bestandteile ergänzt sich auf 100 Gew.-%.

Bezogen auf 100 Gew.-% der Kernzusammensetzung können die Zusammensetzungen zusätzlich bis zu etwa 60 Gew.-%, vorzugsweise bis zu etwa 40 Gew.-% inerte/weitgehend inerte Substanzen (insbesondere lösliche Alkalisalze, z.B. Alkalichloride, oder nicht komplexierendes Metaphosphat) und bis zu etwa 10 Gew.-% staubbindende Substanzen und bis zu etwa 10 Gew.-% Tenside und Netzmittel und/oder weitere Komplexbildner auf einer anderen chemischen Basis (Hydroxysäuren bzw. Polyhydroxysäuren) enthalten. Sie können ferner fakultativ geringere Mengen an wirkungsverbessernden Zusätzen wie z.B. Enzymen oder Desinfektionsmitteln oder ähnlichen Zusätzen enthalten. Auch wenn das aus den o.g. Gründen nicht erwünscht ist, können zusätzlich auch übliche organische Komplexbildner wie Säuren oder Salze, insbesondere Hydroxycarbonsäurne, vorhanden sein. Die zusätzliche Anwesenheit solcher Bestandteile soll nicht aus dem Schutzbereich eines auf die vorliegende Anmeldung erteilten Schutzrechts herausführen können.

Sind in den Zusammensetzungen zusätzliche Bestandteile der genannten Art vorhanden, vermindern sich, bezogen auf das Gesamtgewicht der Zusammensetzung naturgemäß die anteiligen Gewichtsmengen der Bestandteile der o.g. Kernzusammensetzung. Es ist dabei jedoch darauf zu achten, dass die anteiligen Mengen, bezogen auf das Gesamtgewicht der Zusammensetzung, vorzugsweise nicht unter die folgenden Untergrenzen absinken:

| | |
|---|---|
| Natriumdithionit | < 10 Gew.-% |
| komplexierende Phosphate | < 15 Gew.-% |
| Puffersubstanzen | < 3 Gew.-% |

Vorzugsweise sollten die genannten Bestandteile zur Erzielung einer hervorragenden Wirksamkeit bei der Reinigung von Trinkwasserbehältern in folgenden Menge vorliegen

| | |
|---|---|
| Natriumdithionit | > 30 Gew.-%, bevorzugt > 50 Gew.-% |
| Kondensierte Phosphate | > 30 Gew.-%, bevorzugt > 40 Gew.-% |
| Puffersubstanzen | > 3 Gew.-%, bevorzugt > 6 Gew.-% |

## Patentansprüche

1. Verfahren zur Entfernung von Belägen aus Trinkwasserversorgungseinrichtungen, insbesondere zur Entfernung von an den mit Wasser in Kontakt stehenden Oberflächen von Trinkwasserbehältern gebildeten Belägen, bei dem man
eine wässrige Behandlungslösung, die durch Auflösung einer Zusammensetzung, die wenigstens ein Alkalidithionit in einer Menge von > 10 Gew.-%, einen Komplexbildner in einer Menge von > 15 Gew.-% und in einer Menge von > 3 Gew.-% eine den pH-Wert puffernde Substanz zur Einstellung eines pH-Werts im Bereich von 4,5 bis 8,5 enthält, wobei der Komplexbildner wenigstens teilweise von anorganischen, komplexierenden kondensierten Polyphosphaten mit zwei oder mehr Phosphoratomen im Polyphosphorsäuremolekül gebildet wird, die die einzigen in der Zusammensetzung vorhandenen phosphorhaltigen Komplexbildner sind, in Wasser erhalten wurde,
auf die zu behandelnden Oberflächen aufsprüht und
nach der für eine zur Belagablösung erforderlichen Einwirkungszeit die behandelten Oberflächen mit Wasser nachspült.

2. Verfahren nach Anspruch 1, wobei als anorganisches kondensiertes Polyphosphat Natriumtripolyphosphat verwendet wird.

3. Verfahren nach Anspruch 1 oder 2, wobei die pH-Wertpuffernde Substanz Alkalihydrogencarbonat umfaßt.

4. Verfahren nach einem der Ansprüche 1 bis 3, wobei die Zusammensetzung ferner eine wasserlösliche staubbindende Substanz, die ausgewählt ist aus mehrwertigen Alkoholen, Polyglykolen und deren Derivaten, sowie gegebenenfalls ein Tensid oder Netzmittel enthält.

5. Verfahren nach einem der Ansprüche 1 bis 4, wobei die Zusammensetzung als Feststoffformulierung verwendet wird.

6. Verfahren nach einem der Ansprüche 1 bis 5, wobei die Zusammensetzung als Zweikomponenten-Produkt vorliegt, wobei wenigstens eine der Komponenten eine Feststoffkomponente ist.

7. Verfahren nach einem der Ansprüche 1 bis 6, wobei die mit Wasser in Kontakt stehenden Oberflächen von Trinkwasserbehältern die Wände der Trinkwasserbehälter und/oder Gerätschaften und technische Einrichtungen aus Trinkwasserbehältern sind.

## Claims

1. Method for removing deposits from installations for the supply of drinking water, more specially for removing deposits formed on the surfaces of drinking water reservoirs which are in contact with the water, wherein
an aqueous treatment solution formed by dissolving in water a composition containing at least one alkali dithionite in an amount of > 10 % by weight, a complexing agent in an amount of > 15 % by weight and, in an amount of > 3 % by weight, a pH buffer substance for adjusting the pH in a range of 4.5 to 8.5, said complexing agent being formed at least partially from inorganic, complexing condensed polyphosphates having two or more phosphorus atoms in the polyphosphoric acid molecule, which are the only phosphorus containing complexing agents in the composition
is sprayed on the surfaces to be treated and,
after a contact time required to dissolve the deposits, the treated surfaces are rinsed with water.

2. Method according to Claim 1, wherein sodium tripolyphosphate is used as inorganic condensed polyphosphate.

3. Method according to Claim 1 or 2, wherein the pH buffer substance comprises an alkali hydrogen carbonate.

4. Method according to any one of Claims 1 to 3, wherein die composition further comprises a water soluble dust-binding substance selected from polyhydric alcohols, polyglycols and their derivatives, and, optionally, a surfactant or wetting agent.

5. Method according to any one of Claims 1 to 4, wherein the composition is used as a formulation of solids.

6. Method according to any one of Claim 1 to 5, wherein the composition is provided as bi-component product, one of the components being a solid component.

7. Method according to any one of Claims 1 to 6, wherein the surfaces of drinking water reservoirs contacting the water are the walls of the drinking water reservoirs and/or technical installations of drinking water reservoirs.

## Revendications

1. Procédé pour l'élimination de dépôts dans des installations d'alimentation d'eau potable, en particulier pour l'élimination de dépôts qui se forment, dans des réservoirs d'eau potable, sur les surfaces en contact avec l'eau, dans lequel
on pulvérise sur les surfaces à traiter une solution aqueuse de traitement qui a été obtenue par dissolution dans de l'eau d'une composition qui contient au moins un dithionite alcalin dans une quantité > 10 % en poids, un formateur de complexe dans une quantité > 15 % en poids et une quantité > 3 % en poids d'une substance qui tamponne la valeur de pH afin d'établir une valeur de pH dans la plage de 4,5 à 8,5, et le formateur de complexe est formé au moins partiellement avec des polyphosphates condenseurs complexeurs inorganiques avec deux ou plusieurs atomes de phosphore dans la molécule d'acide polyphosphorique, lesquels sont les seuls formateurs de complexe contenant du phosphore présents dans la composition, et
après un temps d'action nécessaire pour une dissolution des dépôts, on rince les surfaces traitées avec de l'eau.

2. Procédé selon la revendication 1, dans lequel on utilise du tripolyphosphate de sodium à titre de polyphosphate condenseur inorganique.

3. Procédé selon la revendication 1 ou 2, dans lequel la substance qui tamponne la valeur du pH inclut un carbonate d'hydrogène alcalin.

4. Procédé selon l'une des revendications 1 à 3, dans lequel la composition contient en outre une substance d'agglutination de poussière, soluble dans l'eau, qui est choisie parmi les alcools multivalents, les polyglycols et leurs dérivés, ainsi que le cas échéant un agent tensioactif ou un agent mouillant.

5. Procédé selon l'une des revendications 1 à 4, dans lequel la composition est utilisée sous forme de formule solide.

6. Procédé selon l'une des revendications 1 à 5, dans lequel la composition se présente sous forme d'un produit à deux composantes, où l'une au moins des composantes est une composante solide.

7. Procédé selon l'une des revendications 1 à 6, dans lequel les surfaces, en contact avec l'eau, de réservoirs d'eau potable sont les parois des réservoirs et/ou des appareillages pour eau potable et les installations techniques formées de réservoirs d'eau potable.
